# FASCICULE DE BREVET EUROPEEN

(11) **EP 1 350 977 B1**
(45) Date de publication et mention de la délivrance du brevet: **13.10.2010**
(21) Numéro de dépôt: 03290501.0
(22) Date de dépôt: 03.03.2003
(51) Int. Cl.: F16D 23/14

(54) **Système de commande d'embrayage pour véhicule automobile et dispositif d'entraînement associé**
Steuerung für eine Kraftfahrzeugkupplung und zugehörige Betätigungseinrichtung
Control system for automotive vehicle clutch and actuating device therefore

(30) Priorité: 06.03.2002 FR 0202854
(43) Date de publication de la demande: 08.10.2003
(73) Titulaire: Aktiebolaget SKF, 415 50 Göteborg (SE)
(72) Inventeur: Girardin, Hervé, 37300 Joue-les-Tours (FR); Arnault, Benoit, 37540 Saint-Cyr-sur-Loire (FR)
(74) Mandataire: Casalonga, Axel

(56) Documents cités:
- EP-A- 0 892 188
- EP-A- 1 146 244
- DE-A- 19 912 432
- DE-A- 19 958 044
- US-A1- 2002 066 607

## Description

La présente invention concerne un système de commande d'embrayage pour véhicule automobile et un dispositif d'entraînement associé.

Les efforts constants pour la réduction des émissions polluantes et de la consommation des moteurs à combustion interne des véhicules automobiles ont conduit à la conception de véhicules hybrides dont les dispositifs d'entraînement comprennent un moteur à combustion interne et au moins un moteur électrique associé.

Un dispositif d'entraînement d'un véhicule hybride doit permettre l'accouplement en rotation du moteur à combustion interne et du moteur électrique avec un arbre relié mécaniquement aux roues du véhicule. Une liaison doit être possible entre l'arbre et le vilebrequin du moteur à combustion interne, et entre l'arbre et le rotor du moteur électrique, simultanément ou non.

Dans les dispositifs d'accouplement classiques, un embrayage à commande axiale est commandé par un organe de commande. Une butée à roulement est disposée entre l'embrayage et l'organe de commande pour pouvoir transmettre un effort axial entre l'embrayage tournant et l'organe de commande fixe en rotation.

Dans certains agencements de dispositifs d'entraînement de véhicules hybrides, le rotor du moteur électrique est lié en rotation à l'arbre en étant interposé entre l'embrayage et l'organe de commande, empêchant la transmission directe d'un effort axial de commande de l'organe de commande vers l'embrayage.

On connaît, par le document FR 2 808 572 qui divulgue toutes les caractéristiques du préambule des revendications 1 et 12 un dispositif d'embrayage pour véhicule automobile comprenant un embrayage, un système de commande de l'embrayage, et un rotor d'un moteur électrique interposé entre l'embrayage et le système de commande. Le dispositif comporte des pièces de liaison traversant le rotor électrique, lesdites pièces de liaison étant solidaires du rotor tout en étant mobiles en translation par rapport à ce dernier. Le système de commande est susceptible d'agir sur lesdites pièces de liaison pour les déplacer en translation et provoquer le débrayage par déformation d'un diaphragme de l'embrayage.

Cependant, les pièces de liaison traversent le rotor du moteur électrique par une zone de grand diamètre. Les pièces de liaison sont en contact d'une part avec le diaphragme, et d'autre part avec un piston du système de commande par l'intermédiaire de butées à roulement de grand diamètre. Des pistes de roulement sont formées dans le piston et les pièces de liaison. Le système de commande, le diaphragme et les butées à roulement doivent être fabriquées spécifiquement. La particularité de ces pièces entraîne un coût de fabrication élevé.

La présente invention a pour objet de pallier ces inconvénients en proposant un système de commande d'embrayage de coût de fabrication faible.

Un tel système de commande d'embrayage pour véhicule automobile comprend une première butée à roulement mobile axialement et en contact axial avec un organe de commande, une seconde butée à roulement prévue pour un contact axial avec un diaphragme de l'embrayage, des poussoirs axiaux disposés entre la première butée et la seconde butée et traversant un élément rotatif interposé entre le diaphragme et l'organe de commande. Le système comprend en outre un capot d'appui pour transmettre des efforts entre des extrémités des poussoirs et une portion frontale d'une bague de la première butée.

La première butée est en contact avec une extrémité d'un poussoir par l'intermédiaire d'un capot d'appui. Les portions frontales de butée coopérant avec un diaphragme d'embrayage peuvent ne pas être adaptées pour coopérer directement avec des poussoirs. Un capot d'appui permet une adaptation d'une butée standard pour la transmission d'effort avec les poussoirs. Ainsi, le capot permet l'utilisation d'une seconde butée destinée à venir en contact avec le diaphragme et d'une première butée identiques ou comprenant des éléments identiques. Notamment, une bague de la seconde butée destinée au contact avec le diaphragme peut être identique à une bague de la première butée en contact avec les poussoirs par l'intermédiaire du capot.

Dans un mode de réalisation, le capot comprend un disque radial d'appui. Le disque permet une adaptation radiale de la portion frontale de la bague, notamment si les poussoirs ne sont pas situés en regard radialement de la portion frontale. Certaines butées, utilisées dans les systèmes de commande d'embrayage, présentent des portions frontales annulaires bombées mal adaptées pour coopérer avec des extrémités de poussoirs axiaux. Une portion annulaire bombée transmet un effort axial symétrique lorsqu'elle est en contact axial avec une surface symétrique de révolution, comme une zone de moindre diamètre d'un diaphragme. Même si des poussoirs axiaux sont répartis de façon symétrique, une extrémité de chaque poussoir axial risque de venir en contact sur une zone de surface inclinée de la portion annulaire frontale bombée, ce qui entraînerait une sollicitation radiale du poussoir et une mauvaise transmission d'efforts axiaux. Le disque présente une surface radiale mieux adaptée pour la transmission d'efforts axiaux vers les poussoirs. Le capot permet donc une adaptation d'une surface de contact d'une bague avec des poussoirs axiaux.

Avantageusement, le capot comprend un rebord de centrage destiné à coopérer avec une surface de révolution d'une bague de la première butée. Le rebord de centrage permet par exemple de centrer un disque radial du capot sur la première bague. Dans ce cas, le rebord de centrage peut s'étendre à partir d'une zone de moindre diamètre du disque pour coopérer avec un alésage de la portion frontale.

Dans un mode de réalisation, le capot comprend un rebord de fixation sur une bague de la première butée pourvu de saillies radiales ou d'un bourrelet. Le rebord de fixation peut être un rebord de centrage. Les saillies radiales ou le bourrelet permettent la fixation du capot par interférence radiale avec la bague de la première butée. Les saillies peuvent être obtenues par sertissage. Un bourrelet peut être continu ou interrompu en formant des secteurs angulaires continus.

Dans un mode de réalisation, le capot est fixé sur la portion frontale par collage. Ce mode de fixation est simple et peu coûteux.

Dans un mode de réalisation, le capot comprend un disque radial en contact avec une portion frontale d'une bague extérieure de la première butée, et une portion cylindrique extérieure entourant la bague extérieure, et pourvue à son extrémité libre de moyens de fixation sur une extrémité de la bague extérieure opposée à la portion frontale.

Dans un mode de réalisation, le capot est monobloc avec la bague et comprend un disque radial et une portion de liaison avec la bague. La formation d'un capot monobloc peut être obtenue par emboutissage ou pliage d'une bague en tôle. Le capot et la bague formés d'une seule pièce assurent la bonne fixation du capot sur la bague et la bonne transmission d'efforts axiaux.

Avantageusement, les première et seconde butées comprennent au moins une bague identique. Les première et seconde butées peuvent comprendre des bagues d'appui respectivement sur les extrémités des poussoirs opposées à la seconde butée et sur le diaphragme identiques, puisque le capot permet une adaptation de ladite bague d'appui de la première butée. Les autres bagues des première et seconde butées peuvent également être identiques, que les bagues d'appui soient identiques ou non. Les éléments roulants, des cages d'espacement ou des moyens d'étanchéité des première et seconde butées peuvent également être identiques.

L'utilisation d'éléments identiques dans les butées à roulement permet une standardisation des éléments utilisés pour réduire le coût de fabrication du système de commande d'embrayage.

Avantageusement, les première et seconde butées comportent des manchons d'auto-alignement identiques. L'utilisation de butées à roulement pourvues de manchon d'auto-alignement permet une compensation de défauts de coaxialité entre l'organe de commande, l'élément rotatif interposé entraînant le poussoir en rotation et l'embrayage. Si aucun moyen de correction de défaut de coaxialité n'est prévu, la mise en contact répétée des différents éléments présentant des défauts de coaxialité entraîne un risque de rupture prématurée des différentes pièces.

Dans un mode de réalisation, un poussoir comporte une extrémité arrondie en contact avec un élément radial d'appui d'une butée, un capot ou une plaque d'appui, ce qui permet la transmission d'efforts axiaux entre le poussoir et la butée tout en autorisant un léger pivotement du poussoir pour compenser un défaut de parallélisme entre l'axe du poussoir et l'axe de la butée. Par exemple, l'extrémité du poussoir en contact avec la première butée par l'intermédiaire du capot peut être arrondie, pour compenser un défaut de parallélisme entre les deux butées, l'autre extrémité du poussoir étant plane.

Dans un mode de réalisation, le poussoir est en contact par une extrémité avec une plaque d'appui d'un manchon de manoeuvre de la seconde butée. Le roulement de la butée est monté sur le manchon de manoeuvre par l'intermédiaire d'un manchon d'auto-alignement, autorisant un léger déplacement radial du roulement par rapport à la plaque d'appui, tout en étant en contact axial avec cette dernière en vue de la transmission d'efforts axiaux.

Dans un mode de réalisation, la première butée est montée coulissante sur un tube-guide, la seconde butée étant montée coulissante sur une portée cylindrique de l'élément interposé. Le montage des butées sur des portées de guidage permet l'utilisation de butées identiques en tout ou partie. En particulier, on peut prévoir que les portées de guidage des première et seconde butées possèdent des diamètres extérieurs sensiblement égaux, permettant l'utilisation de manchons de manoeuvre ou de bague identiques ou au moins similaires, possédant des diamètres moyens sensiblement égaux.

L'invention concerne également un dispositif d'entraînement pour véhicule automobile à motorisation hybride comprenant un rotor interposé axialement entre un diaphragme d'un embrayage et un organe de commande de l'embrayage, une première butée à roulement mobile axialement et en contact axial avec un organe de commande, une seconde butée à roulement prévue pour un contact axial avec un diaphragme de l'embrayage, des poussoirs axiaux disposés entre la première butée et la seconde butée et traversant le rotor interposé entre le diaphragme et l'organe de commande. Le dispositif comprend en outre un capot d'appui de transmission d'efforts entre des extrémités des poussoirs et une portion frontale d'une bague de la première butée.

La présente invention et ses avantages seront mieux compris à l'étude de la description détaillée d'un mode de réalisation pris à titre d'exemple nullement limitatif et illustré par les dessins annexés, sur lesquels :
- la figure 1 est une vue en coupe axiale d'un système de commande d'embrayage selon l'invention ;
- la figure 2 est une vue en coupe axiale du système de la figure 1, dans un autre plan de coupe ;
- la figure 3 est une vue en coupe radiale du système de commande d'embrayage de la figure 1, selon III-III ;
- la figure 4 est une demi-vue en coupe axiale d'une butée pour le système de la figure 1 ;
- la figure 5 est une demi-vue en coupe axiale d'une butée selon un second mode de réalisation ;
- la figure 6 est une demi-vue en coupe axiale d'une butée selon un troisième mode de réalisation ;
- la figure 7 est une demi-vue en coupe axiale d'une butée selon un quatrième mode de réalisation ; et
- la figure 8 est une demi-vue en coupe axiale d'une butée selon un cinquième mode de réalisation.

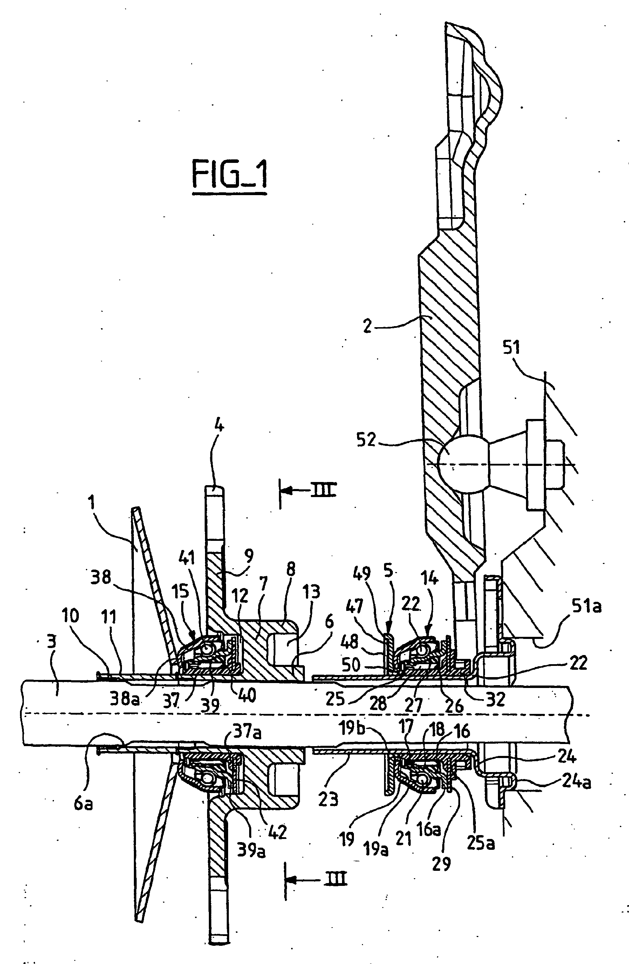

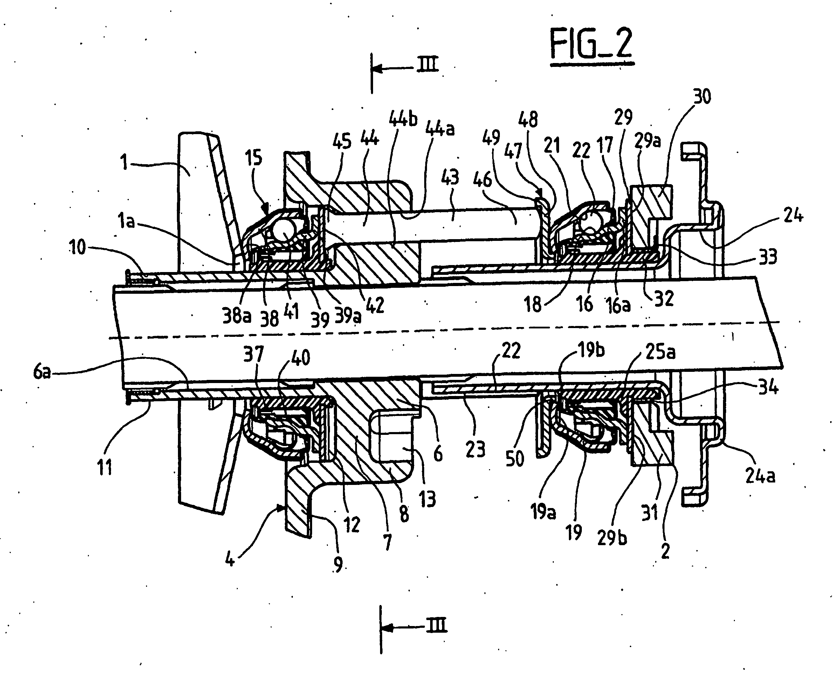

Sur les figures 1 et 2, un dispositif d'entraînement de véhicule automobile comprend un diaphragme 1 d'embrayage et un organe de commande sous la forme d'une fourchette de commande 2. Le diaphragme 1 entoure un arbre primaire 3 d'une boîte de vitesses non représentée. Un rotor 4, lié en rotation à la partie tournante d'un moteur électrique non représenté, est disposé axialement entre le diaphragme 1 et la fourchette 2. Le rotor 4 est coaxial et lié en rotation à l'arbre 3. Un système de commande d'embrayage, référencé 5 dans son ensemble, permet de transmettre un mouvement axial d'une extrémité de la fourchette 2 à une portion du diaphragme 1 en vue de la déformation de ce dernier.

Le rotor 4 comprend une portion cylindrique 6 entourant l'arbre 3, une portion radiale 7 s'étendant vers l'extérieur à partir de l'extrémité de la portion cylindrique 6 située du côté du diaphragme 1. Le rotor 4 comprend une portion cylindrique extérieure 8 s'étendant axialement de part et d'autre de la zone de plus grand diamètre de la portion radiale 7 et un disque 9 s'étendant radialement vers l'extérieur à partir de l'extrémité de la portion cylindrique extérieure 8 située du côté du diaphragme 1. Le rotor 4 comprend une extension axiale cylindrique 10 mince en forme de tube s'étendant du côté du diaphragme 1 en prolongeant un alésage 6a de la portion cylindrique intérieure 6 du rotor 4.

L'extension axiale cylindrique 10 présente une portée cylindrique extérieure 11. Une gorge annulaire 12 est formée dans le rotor 4 en étant limitée radialement par la portion cylindrique extérieure 8 et l'extension cylindrique axiale 10, et axialement par la portion radiale 7. Une gorge 13 est formée dans le rotor 4 en étant limitée radialement entre la portion cylindrique intérieure 6 et la portion cylindrique extérieure 8, et axialement par la portion radiale 7. Le rotor 4 est lié en rotation à l'arbre 3 par l'intermédiaire de cannelures formées sur la surface extérieure de l'arbre 3 et sur l'alésage 6a. L'extension cylindrique axiale 10 s'étend axialement de façon qu'elle traverse une ouverture centrale 1a du diaphragme 1.

Le système de commande d'embrayage 5 comprend une première butée à roulement 14 située du côté du rotor 4 de la fourchette de commande 2, et une seconde butée à roulement 15 située du côté du rotor 4 du diaphragme 1.

La butée à roulement 14 comprend une bague intérieure 16 en tôle emboutie munie sur une surface extérieure 17 d'un chemin de roulement toroïdal 18, et une bague extérieure 19 en tôle emboutie pourvue sur une surface intérieure 20 d'un chemin de roulement toroïdal 21. Des éléments roulants 22, ici des billes, sont disposés entre les chemins de roulement 21, 18 des bagues intérieure 16 et extérieure 19. Les bagues intérieure 16 et extérieure 19 forment avec les éléments roulants 22 un roulement à contact oblique.

La bague extérieure 19 comprend une portion frontale d'appui bombée 19a convexe vers l'extérieur, s'étendant vers l'intérieur à partir d'une extrémité axiale de la bague extérieure 19 située du côté du rotor 4. La portion d'appui 19a se situe axialement au-delà de l'extrémité axiale de la bague intérieure 16. La bague intérieure 16 comprend une portion radiale d'appui 16a s'étendant vers l'extérieur à partir de l'extrémité axiale de la bague intérieure 16 opposée au rotor 4, en se situant axialement au-delà d'une extrémité axiale de la bague extérieure 19 du côté opposé au rotor 4.

La butée à roulement 14 est montée coulissante sur un tube-guide 22 en tôle emboutie entourant l'arbre 3 par l'intermédiaire d'un manchon de manoeuvre 25. Le tube-guide 22 comprend une portée cylindrique extérieure 23 prolongée du côté opposé au rotor 4 par une partie de fixation 24 sur un carter 51. La partie de fixation 24 est en appui axial sur le carter 51, en étant centrée dans un alésage 51a du carter 51 traversé par l'arbre 3, par l'intermédiaire d'un bourrelet annulaire 24a formé par pliage de la partie de fixation 24.

La bague intérieure 16 est disposée sur le manchon de manoeuvre 25 par l'intermédiaire d'un manchon d'auto-alignement 26, permettant un léger déplacement radial entre la bague intérieure 16 et le manchon de manoeuvre 25. Le manchon d' auto-alignement 26 comprend une portion annulaire 27 fixée sur la bague intérieure 16, et des projections radiales élastiques 28 s'étendant vers l'intérieur en venant en contact par leur extrémité libre avec une surface extérieure du manchon de manoeuvre 25. Les projections radiales 28 peuvent se déformer élastiquement pour autoriser un mouvement relatif radial entre la bague intérieure 16 et le manchon de manoeuvre 25. La portion d'appui 19a de la bague extérieure 19 s'étend vers l'intérieur en venant à proximité du manchon de manoeuvre 25.

La butée à roulement 14 comprend une plaque d'appui radiale annulaire 29 disposée du côté de la bague intérieure 16 opposé au rotor 4 et dont la zone de moindre diamètre est noyée dans un bourrelet radial 25a du manchon de manoeuvre 25. La bague intérieure 16 est en contact par sa paroi d'appui 16a avec une première face de la plaque d'appui, la plaque d'appui 29 étant destinée à être en contact avec des doigts 30, 31 de la fourchette de commande 2 par sa face opposée.

Comme on peut mieux le voir sur la figure 2, le manchon de manoeuvre 25 comprend une extension axiale 32 s'étendant du côté de la plaque d'appui 29 opposée aux bagues intérieure et extérieure 16, 19. Des doigts 30, 31 de la fourchette de commande 2 viennent de part et d'autre de facettes axiales de l'extension axiale 32 en interdisant une rotation du manchon de manoeuvre 25 par rapport à la fourchette de commande 2. Les doigts 30, 31 de la fourchette de commande 2 sont retenus axialement sur la butée à roulement 14 par l'intermédiaire d'agrafes de liaison 33, 34, attelant axialement les doigts 30, 31 et le manchon de manoeuvre 25. Des portions de commande 29a, 29b de la plaque d'appui 29 sont découvertes, c'est-à-dire qu'elles ne sont pas recouvertes par le bourrelet 25a du manchon de manoeuvre 25, pour permettre un contact direct avec les doigts 30, 31 de la fourchette de commande 2. L'extension axiale 32 s'étend axialement au-delà des portions de commande 29a, 29b de la plaque d'appui 29.

La seconde butée à roulement 15 est sensiblement identique à la première butée à roulement 14. La seconde butée à roulement 15 comprend un manchon de manoeuvre 37, une bague intérieure 39 montée sur le manchon de manoeuvre 37 par l'intermédiaire d'un manchon d'auto-alignement 40, une bague extérieure 38, et des éléments roulants 41. La bague extérieure 38 comprend une portion frontale bombée d'appui 38a du côté du diaphragme 1, destinée à venir en contact axial avec une zone de moindre diamètre du diaphragme 1. La bague intérieure 39 comprend une portion radiale d'appui 39a du côté opposé au diaphragme 1, en contact axial avec une plaque d'appui radiale annulaire 42 comprenant une zone de moindre diamètre noyée dans un bourrelet radial 37a du manchon de manoeuvre 37. La seconde butée à roulement 15 diffère de la première par le fait que le manchon de manoeuvre 37 est dépourvue d'extension axiale sur une partie arrière. Les bagues intérieure 39 et extérieure 38 forment avec les éléments roulants 41 un roulement à contact oblique.

Le manchon de manoeuvre 37 est ajusté sur la portée cylindrique 11 de l'extension axiale cylindrique 10 du rotor 4 de manière à glisser librement sur ladite extension axiale 10.

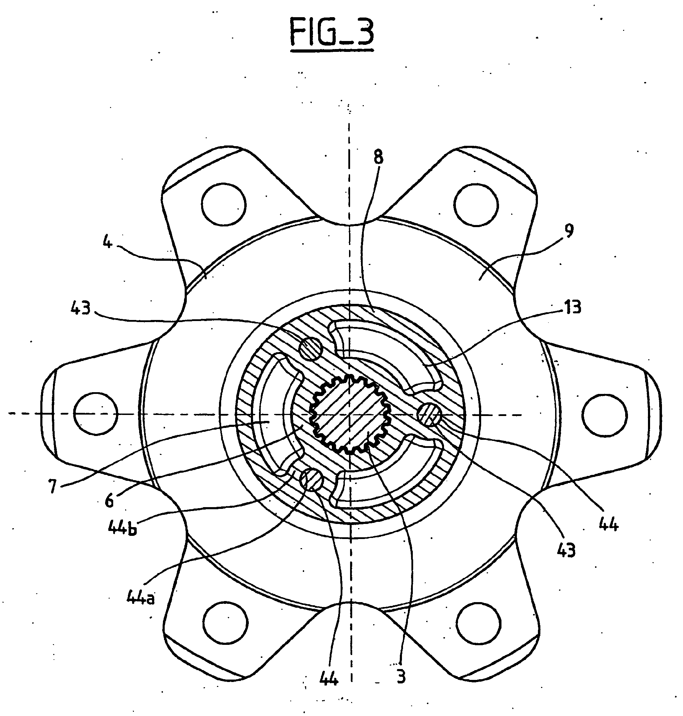

Comme on peut le voir sur la figure 2, un poussoir 43 est disposé entre les première et seconde butées à roulement 14, 15. Le poussoir 43 traverse un perçage 44 de la paroi radiale 7 du rotor 4 en étant en contact direct avec ce dernier. Le poussoir 43 vient en contact par une extrémité plane 45 avec la plaque d'appui 42 de la seconde butée à roulement 15. Le poussoir 43 vient en contact par son extrémité opposée arrondie 46 avec un capot d'appui 47, lui-même en contact avec la portion frontale bombée d'appui 19a de la bague extérieure 19 de la première butée à roulement 14. Le perçage 44 possède un alésage 44a allongé par l'intermédiaire d'un prolongement de matière 44b s'étendant axialement dans la gorge annulaire 13 pour un meilleur guidage axial du poussoir 43. Le poussoir 43 comprend à son extrémité 45 une surépaisseur radiale 45a empêchant le passage complet du poussoir 43 à travers le perçage 44. Comme on peut le voir sur la figure 3, le système de commande d'embrayage 5 comprend trois poussoirs circonférentiellement régulièrement espacés. La gorge 13 est interrompue par les prolongements de matières 44b de guidage des poussoir 43.

Le capot 47 possède une forme générale de coupelle et comprend un disque 48, un rebord extérieur 49 s'étendant axialement du côté du rotor 4 à partir de la zone de plus grand diamètre du disque 48, et un rebord intérieur 50 s'étendant axialement du côté de la butée à roulement 14, dans un alésage 19b de la portion bombée d'appui 19a de la bague extérieure 19. Le capot 47 est centré dans l'alésage 19b de la bague extérieure 19 par l'intermédiaire de son rebord intérieur 50. Le capot 47 permet la transmission et la répartition des efforts axiaux entre la bague extérieure 19 et les poussoirs 43.

Le diaphragme 1, la fourchette 2 et la première butée à roulement 14 sont des éléments utilisés de façon connue dans les systèmes de commande de débrayage de véhicules à combustion interne.

Tel que représenté sur les figures 1 et 2, le système de commande d'embrayage 5 est en position embrayée. Les première et seconde butées à roulement 14, 15 sont en position reculée respectivement sur le tube-guide 22 et l'extension axiale cylindrique 10. La seconde bague à roulement 15 se situe en partie dans la gorge annulaire 12 du rotor 4. La surépaisseur 45a du poussoir 43 vient buter contre la paroi radiale 7 du rotor 4, empêchant un recul supplémentaire de la seconde butée à roulement 15. La première butée à roulement 14 est reculée sur la portée cylindrique 23 du tube-guide 22 jusqu'à venir axialement à proximité de la partie de fixation 24.

Dans cette position, l'arbre 3 est entraîné en rotation par le moteur à combustion interne, non représenté qui assure ainsi l'entraînement du véhicule automobile. Le moteur électrique, dont la partie tournante est liée en rotation à l'arbre 3 par l'intermédiaire du rotor 4, peut fonctionner soit en générateur de courant, c'est-à-dire qu'il exerce un couple de freinage et récupère de l'énergie sous forme électrique, soit en exerçant un couple moteur d'entraînement de l'arbre 3 pour apporter un surcroît de puissance venant en complément de la puissance fournie par le moteur à combustion interne lorsque cela est nécessaire. Dans cette position, le diaphragme 1 tourne avec l'arbre 3 et entraîne en rotation la bague extérieure 38 de la seconde butée 15. Le rotor 4 tourne à la même vitesse que l'arbre 3 et le diaphragme 1. Le rotor 4 entraîne en rotation le manchon de manoeuvre 37 et la bague intérieure 39 de la seconde butée 15 par contact de friction avec les poussoirs 43 entraînés en rotation autour de l'axe de l'arbre 3. Les poussoirs 43 entraînent en rotation friction entre le capot 47 et la bague extérieure 19 de la première butée 14. La bague intérieure 16 de la première butée 14 reste immobile en rotation.

La fourchette 2 est montée pivotante sur le carter 51 par l'intermédiaire d'une rotule 52 en position décalée radialement par rapport à l'arbre 3. Lorsqu'on débraye, la fourchette de commande 2 est pivotée autour de la rotule 52 de façon que les doigts 30, 31 se déplacent principalement selon l'axe de l'arbre 3, en suivant un arc de cercle. Les doigts 30, 31 exercent un effort axial en direction du diaphragme 1 Les doigts 30, 31 appuient sur les portions de commande 29a, 29b de la plaque d'appui 29 de la première butée à roulement 14. Le contact direct entre les doigts 30, 31 et les portions de commande 29a, 29b généralement métalliques, facilite un glissement des doigts sur la plaque d'appui 29, du fait du mouvement des doigts 30, 31 qui n'est pas parfaitement axial. L'effort axial est transmis par l'intermédiaire de la plaque d'appui 29 et des bagues intérieure et extérieure 16, 19 au capot d'appui 47, aux poussoirs 43, puis à la seconde butée 15. La butée 15 transmet cet effort axial à la portion de moindre diamètre du diaphragme 1 en vue de sa déformation élastique pour provoquer un débrayage.

Lorsque le diaphragme 1 est suffisamment déformé, l'arbre 3 est désolidarisé en rotation du moteur à combustion interne. Si la puissance d'entraînement de l'arbre 3 est apportée uniquement par le moteur thermique, cette position débrayée permet, comme sur un véhicule conventionnel, d'effectuer les changements de rapport de boîte de vitesses. Cette position débrayée peut aussi permettre de changer de mode de fonctionnement du véhicule hybride, par exemple pour passer à un mode de fonctionnement dans lequel la puissance est fournie uniquement par le moteur électrique, ce dernier entraînant l'arbre 3 par l'intermédiaire du rotor 4.

En position débrayée, les poussoirs 43 sont entraînés en rotation par le rotor 4, à la même vitesse que l'arbre 3, et entraînent en rotation la bague extérieure 19 de la première butée 14 et la bague intérieure 39 de la seconde butée 15. La bague extérieure 38 de la seconde butée 15 est entraînée en rotation par le diaphragme 1. La bague extérieure 19 de la première butée 14 est entraînée en rotation par les poussoirs 43, à la même vitesse de rotation que la bague intérieure 39 de la seconde butée 15. La bague intérieure 16 de la première butée 14 reste immobile en rotation.

L'extension axiale cylindrique 10 est de longueur suffisante pour permettre l'avancée de la seconde butée à roulement 15 jusqu'au débrayage complet. La portée cylindrique 23 du tube-guide 22 est sensiblement de longueur égale à celle de l'extension axiale cylindrique pour permettre une course identique de la première butée à roulement 14.

La portée cylindrique extérieure 11 de l'extension axiale cylindrique 10 du rotor 4 possède un diamètre extérieur sensiblement égal au diamètre extérieur de la portée cylindrique 23 du tube-guide 22, ce qui permet d'utiliser des première et seconde butées à roulement comprenant des bagués extérieures et intérieures et des éléments roulants identiques, et des manchons de manoeuvre similaires. Les portées cylindriques 11, 23 permettent l'utilisation de butées à roulement 14, 15 du type standard, adaptée à l'aide de manchons de manoeuvre appropriés pouvant facilement être obtenus par moulage par injection de matière synthétique.

Dans ce mode de réalisation, les butées à roulement 11, 15 comportent des bagues identiques, des éléments roulants identiques, des manchons d'auto-alignement identiques et des plaques d'appui identiques. Les manchons de manoeuvre 37, 25 présentent des similitudes, ce qui simplifie leur conception, et leur fabrication. Les manchons de manoeuvre 37, 25 comportent des surfaces de contact avec les roulements de butées et les portées de guidage 11, 23 identiques, des bourrelets radiaux 25a, 37a identiques et des plaques d'appui 29, 42 identiques.

La seconde butée 15 coopère avec une zone de moindre diamètre du diaphragme par l'intermédiaire d'une portion bombée d'appui 38a de sa bague extérieure 38. La bague extérieure 19 de la première butée 14 est identique à la bague extérieure 38 de la seconde butée 15. La portion d'appui 19a ne se situe pas radialement en regard des extrémités 46 des poussoirs 43. Le capot 47 comprenant un disque 48 s'étendant radialement vers l'extérieur permet de transmettre les efforts entre les extrémités 46 des poussoirs et la portion d'appui 19a. Le disque 48 est en contact axialement d'un côté avec les poussoirs 43, par sa zone de plus grand diamètre, et du côté opposé avec la portion d'appui 19a par sa zone de moindre diamètre.

Par ailleurs, le contact direct entre une extrémité d'un poussoir 43 et une portion bombée d'appui 19a risquerait de se faire par une zone de surface inclinée moins adaptée pour la transmission d'effort axiaux entre la portion d'appui 19 et les poussoirs 43. Le disque 48 est en contact avec la portion d'appui 19a par une surface de révolution selon l'axe de l'arbre 3 ce qui assure la transmission des efforts axialement entre la bague extérieure 19 et le capot 47. Le disque 48 est en contact avec les poussoirs 43 par une surface radiale assure la transmission axiale des efforts vers les poussoirs 43. Les poussoirs 43 sont répartis de façon symétrique par rapport à l'axe de l'arbre 3, ce qui assure la symétrie axiale des efforts transmis par chaque poussoir 43, et la transmission d'un effort résultant axiale entre les première et seconde butées 14, 15.

Le capot 47 permet donc l'utilisation d'une première butée 14 similaire à la seconde butée 15, qui peut être du type conventionnelle, utilisée dans les dispositifs de débrayage des véhicule automobile à moteur à combustion interne.

Il peut exister un défaut de coaxialité entre le diaphragme 1 et le rotor 4. Le manchon d'auto-alignement 40 de la seconde butée 15 autorise un mouvement radial des bagues intérieure et extérieure 38, 39 de la seconde butée 15 par rapport au manchon de manoeuvre de la seconde butée 15 et donc par rapport au rotor 4. La bague intérieure 39 de la seconde butée 15 est en contact axial avec les poussoirs 43 par l'intermédiaire de la plaque d'appui 42 qui est immobile radialement. La bague intérieure 39 peut glisser radialement sur la plaque d'appui 42. La transmission des efforts du poussoir 43 à la bague intérieure 39 de la seconde butée à roulement 15 par l'intermédiaire de la plaque d'appui 41 permet d'éviter un frottement direct de la bague intérieure 39 de la seconde butée contre l'extrémité 44 du poussoir 43. Il en est de même entre la bague intérieure 16 et les doigts 30, 31 de la fourchette de commande 2.

Par ailleurs, le manchon d'auto-alignement 26 de la première butée 14 permet de compenser un défaut de coaxialité entre le rotor 4 et le tube-guide 22. En outre, le poussoir 43 est en contact avec le capot d'appui 46 par l'intermédiaire d'une extrémité arrondie 46. L'extrémité arrondie 46 permet un léger pivotement entre le poussoir 43 et le capot d'appui 46 pour compenser des défauts de parallélisme entre les axes de rotation des poussoirs 43 et de la première butée 14. Comme un poussoir 43 est guidé en translation par rapport au rotor 4, en traversant les perçages 44 prolongés, et que la seconde butée à roulement 15 est également montée à translation sur le rotor 4, le poussoir 43 peut être en contact avec la seconde butée à roulement 15 par l'intermédiaire d'une extrémité plane.

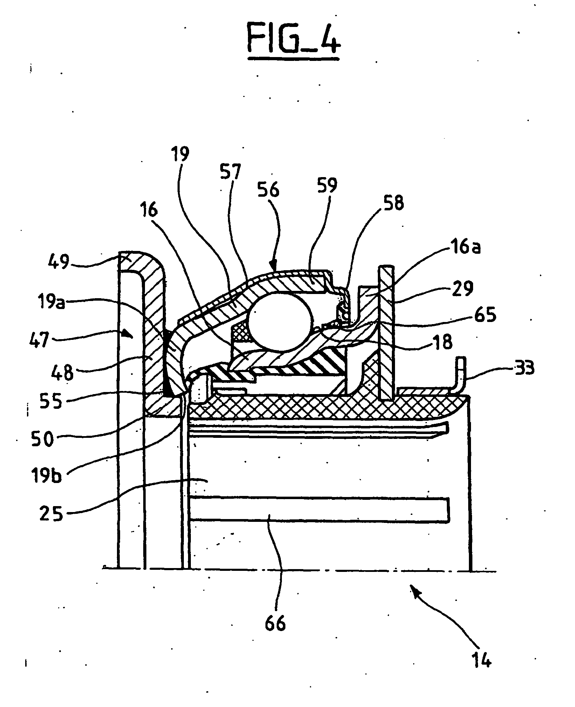

Les figures 4 à 8 illustrent des premières butées 14 munies de capot 47 selon différent mode de réalisation. Sur ces figures, les références semblables aux figures 1 à 3 précédentes ont été conservées.

Sur la figure 4, l'alésage 19b de la portion d'appui 19a est formé par l'extrémité libre de la portion d'appui 19a, et possède un profil tronconique allant en s'évasant du côté opposé au capot 47. Le rebord intérieur 50 du capot 47 est ajusté dans l'alésage 19b en venant en contact avec la zone de moindre diamètre de l'alésage 19b. Un revêtement adhésif 55 est disposé entre le disque 48 et la portion frontale bombée d'appui 19a de la bague extérieure 19.

La butée 14 comprend un moyen d'étanchéité 56 sous la forme d'une armature 57 entourant la bague extérieure 19, et possédant une collerette radiale 58 s'étendant vers l'intérieur entre une extrémité 59 de la bague extérieure 19 opposée à la portion d'appui 19a et la paroi radiale d'appui 16a de la bague intérieure 16. La collerette 58 porte à son extrémité libre une lèvre d'étanchéité 65 venant en contact avec la surface extérieure 18 de la bague intérieure 16. Le manchon de manoeuvre 25 comprend sur une surface intérieure une pluralité de rainures axiales 66 pouvant servir de réserve de lubrifiant pour un meilleur coulissement du manchon de manoeuvre 25 sur le tube-guide 22.

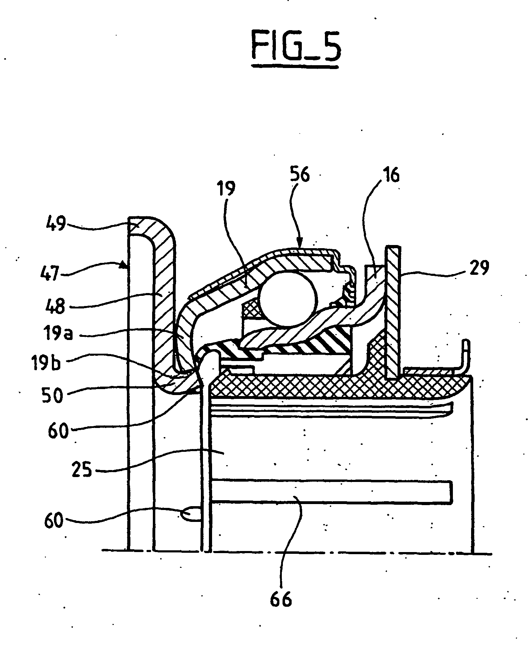

Sur la figure 5, le rebord intérieur de centrage 50 du disque 48 comprend à son extrémité libre des saillies 60 s'étendant radialement vers l'extérieur, et formées par déformation locale du rebord intérieur 50. Les saillies 60 peuvent être formées par sertissage, lorsque le capot 47 a préalablement été ajusté sur la bague extérieure 19. Les saillies 60 permettent la fixation du capot 47 sur la bague extérieure 19 par interférence radiale avec l'extrémité libre de la portion bombée d'appui 19a. Le sertissage permet une fixation du capot 47 simple, et sans ajout de colle. Le rebord intérieur 50 sert à la fois au centrage et à la fixation du capot 47 sur la bague extérieure 19.

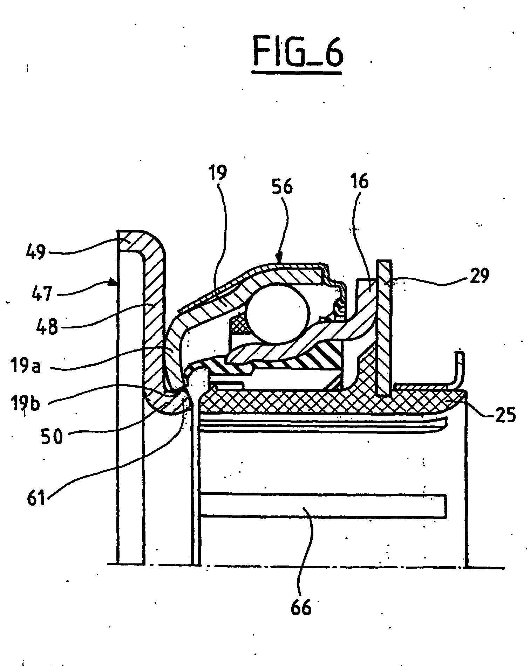

Sur la figure 6, le rebord intérieur 50 présente un bourrelet annulaire continu 61 s'étendant radialement vers l'extérieur, pour une fixation sur la bague extérieure 19 par interférence radiale avec l'alésage 19b de la portion frontale d'appui 19a. Le bourrelet 61 est obtenu en formant une surépaisseur radiale sur l'extrémité libre du rebord intérieur 50. Dans une variante, le bourrelet 61 peut s'étendre uniquement dans des secteurs angulaires déterminés en étant interrompu.

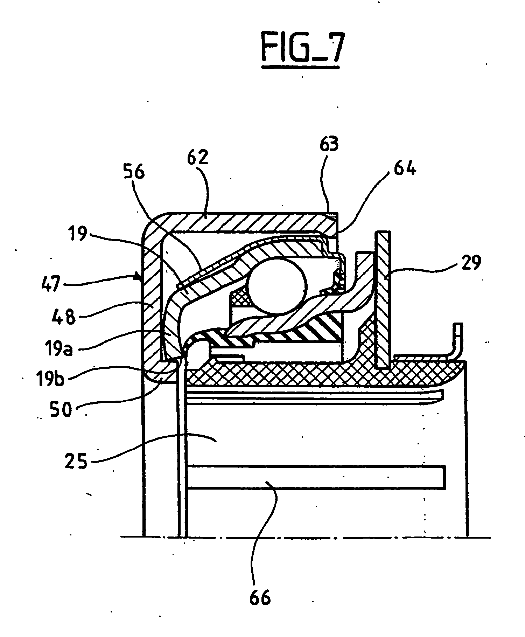

Sur la figure 7, l'extrémité libre du rebord intérieur 50 est dépourvue de saillies ou de surépaisseur. Le rebord intérieur 50 est ajusté dans l'alésage 19a. Le capot 47 comprend une portion cylindrique 62 s'étendant axialement vers la plaque radiale d'appui 29 à partir de la zone de plus grand diamètre du disque 48. La portion cylindrique 62 entoure la bague extérieure 19. L'extrémité libre 63 de la portion cylindrique 62 se situe légèrement au delà du plan radial passant par l'extrémité libre de la bague intérieure 19 opposée à la portion d'appui 19a. La portion cylindrique 62 présente un diamètre intérieur légèrement supérieur à ladite extrémité de la bague extérieure 19. L'extrémité libre 63 de la portion cylindrique 62 comprend des déformations locales obtenues par exemple par poinçonnage, et formant des saillies 64 dirigées vers l'intérieur, venant en interférence radiale avec l'armature 57 recouvrant l'extrémité de la bague intérieure 19 opposée à la portion d'appui 19a. L'extrémité libre 63 de la portion cylindrique 62 forme un rebord de fixation du capot 47 distinct du rebord de centrage 50.

Bien entendu, l'invention n'est pas limitée aux modes de réalisation et de fixation du capot 47 décrit auparavant. Tout moyen de fixation ou de centrage approprié du capot 47 sur la bague extérieure 19 peuvent convenir.

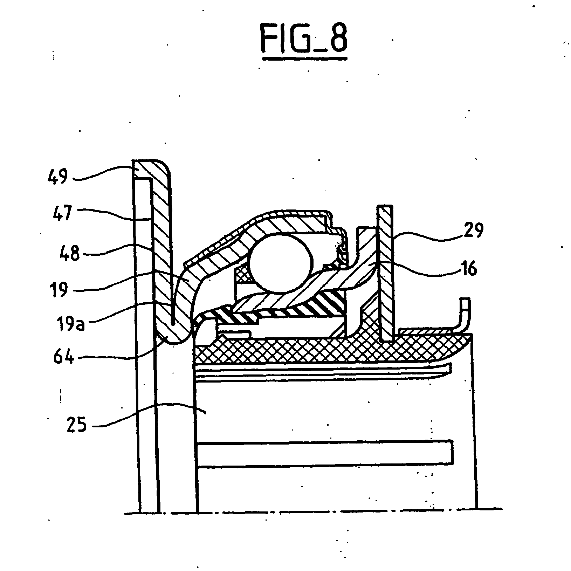

Sur la figure 8, le capot 47 est similaire à celui de la figure 4, en étant monobloc avec la bague extérieure 19. La zone de moindre diamètre du disque 48 et l'extrémité correspondante de la portion d'appui 19a sont reliées par une pliure 64 formant portion de liaison. Dans ce cas, la bague extérieure 19 de la première butée est différente de la bague extérieure 38 de la seconde butée 15 (fig. 2). Par contre, les bagues intérieures 39, 16, les plaques d'appui 41, 29 et les manchons d'auto-alignement sont identiques, ce qui permet encore une simplification de conception, de stockage et d'approvisionnement.

On a décrit un capot 47 en contact avec une bague extérieure. Bien entendu, on pourrait prévoir un capot en contact avec une bague intérieure. En outre, les butées à roulement sont prévues pour coulisser sur des portées cylindriques extérieures. Dans une variante, les butées à roulement sont montées coulissantes sur des portées intérieures de guides pourvus d'alésage.

Le système de commande d'embrayage permet la transmission d'un mouvement axial de commande entre un organe de commande et un embrayage, malgré la présence d'un élément rotatif interposé. Le système d'embrayage peut être réalisé à partir d'éléments standards, comme un disque d'embrayage, une fourchette de commande et une butée de débrayage. Le système de commande permet encore une standardisation des éléments constitutifs du système amenant une réduction de son coût de fabrication. Le système de commande d'embrayage permet également une compensation de défauts de coaxialité entre les différents éléments tournants pour éviter une usure prématurée des éléments.

Le système de commande peut comprendre des butées à roulement identiques, ce qui permet de réaliser des économies en commandant de plus grandes quantités, simplifie l'approvisionnement et le stockage. Par ailleurs, les butées peuvent être du type standards, du type utilisée dans les butées à roulement dans les embrayages de véhicules automobile entraînées à l'aide uniquement de moteurs à combustion interne, ce qui permet une réduction du coût du système de commande comprenant des butées standards, de coût de fabrication faible.

## Revendications

1. Système de commande d'embrayage pour véhicule automobile comprenant une première butée à roulement (14) mobile axialement et en contact axial avec un organe de commande (2), une seconde butée à roulement (15) prévue pour un contact axial avec un diaphragme (1) de l'embrayage, des poussoirs axiaux (43) disposés entre la première butée (14) et la seconde butée (15) et traversant un élément rotatif (4) interposé entre le diaphragme (1) et l'organe de commande (2), **caractérisé par le fait qu'**il comprend un capot d'appui (47) pour transmettre des efforts entre des extrémités des poussoirs (43) et une portion frontale (19a) d'une bague (19) de la première butée (14).

2. Système selon la revendication 1, **caractérisé par le fait que** le capot (47) comprend un disque radial (48) d'appui.

3. Système selon l'une quelconque des revendications 1 ou 2, **caractérisé par le fait que** le capot comprend un rebord de centrage (50) destiné à coopérer avec une surface de révolution d'une bague (19) de la première butée (14) portant la portion frontale (19a).

4. Système selon l'une quelconque des revendications précédentes, **caractérisé par le fait que** le capot (47) comprend un rebord de fixation (50, 53) sur une bague (19) de la première butée (14) pourvu de saillies radiales ou d'un bourrelet.

5. Système selon l'une quelconque des revendications précédentes, **caractérisé par le fait que** le capot (47) comprend un disque radial (48) en contact avec une portion frontale (19a) d'une bague extérieure (19) de la première butée (14), et une portion cylindrique (62) extérieure entourant la bague extérieure (19), et pourvue à son extrémité libre (63) de moyens de fixation sur une extrémité de la bague extérieure (19) opposée à la portion frontale (19a).

6. Système selon la revendication 1, **caractérisé par le fait que** le capot (47) est monobloc avec la bague (19) et comprend un disque radial (48) et une portion de liaison avec la bague (19).

7. Système selon l'une quelconque des revendications précédentes, **caractérisé par le fait que** les première et seconde butées comprennent au moins une bague identique.

8. Système selon l'une quelconque des revendications précédentes, **caractérisé par le fait que** les première et seconde butées (14, 15) comportent des manchons d'auto-alignement (26, 40) identiques.

9. Système selon l'une quelconque des revendications précédentes, **caractérisé par le fait qu'**un poussoir (43) comporte une extrémité arrondie (46) en contact avec un élément radial d'appui (47) d'une butée (14).

10. Système selon l'une quelconque des revendications précédentes, **caractérisé par le fait que** le poussoir (43) est en contact par une extrémité avec une plaque d'appui (42) d'un manchon de manoeuvre (37) de la seconde butée (15).

11. Système selon l'une quelconque des revendications précédentes, **caractérisé par le fait que** la première butée est montée coulissante sur un tube-guide (22), la seconde butée étant montée coulissante sur une portée cylindrique (11) de l'élément interposé (4).

12. Dispositif d'entraînement pour véhicule automobile à motorisation hybride comprenant un rotor interposé axialement entre un diaphragme (1) d'un embrayage et un organe de commande (2) de l'embrayage, une première butée à roulement (14) mobile axialement et en contact axial avec un organe de commande (2), une seconde butée à roulement (15) prévue pour un contact axial avec le diaphragme (1) de l'embrayage, des poussoirs axiaux (43) disposés entre la première butée (14) et la seconde butée (15) et traversant le rotor (4) interposé entre le diaphragme (1) et l'organe de commande (2), **caractérisé par le fait qu'**il comprend un capot d'appui (47) de transmission d'efforts entre des extrémités des poussoirs (43) et une portion frontale (19a) d'une bague (19) de la première butée.

## Claims

1. Clutch control system for a motor vehicle, comprising a first thrust rolling bearing (14) able to move axially and in axial contact with a control member (2), a second thrust rolling bearing (15) designed for axial contact with a diaphragm (1) of the clutch, axial push rods (43) positioned between the first thrust bearing (14) and the second thrust bearing (15) and passing through a rotary element (4) interposed between the diaphragm (1) and the control member (2), **characterized in that** it comprises a pressure cover (47) to transmit forces between ends of the push rods (43) and a transverse portion (19a) of a ring (19) of the first thrust bearing (14).

2. System according to Claim 1, **characterized in that** the cover (47) comprises a radial pressure disc (48).

3. System according to either one of Claims 1 and 2, **characterized in that** the cover comprises a centring rim (50) intended to collaborate with a surface of revolution of a ring (19) of the first thrust bearing (14) bearing the transverse portion (19a).

4. System according to any one of the preceding claims, **characterized in that** the cover (47) comprises a fixing rim (50, 53) for attachment to a ring (19) of the first thrust bearing (14) provided with radial projections or with a bulge.

5. System according to any one of the preceding claims, **characterized in that** the cover (47) comprises a radial disc (48) in contact with a transverse portion (19a) of an outer ring (19) of the first thrust bearing (14) and an external cylindrical portion (62) surrounding the outer ring (19) and provided at its free end (63) with fixing means for fixing to an end of the outer ring (19) that is the opposite end to the transverse portion (19a).

6. System according to Claim 1, **characterized in that** the cover (47) is in one piece with the ring (19) and comprises a radial disc (48) and a connecting portion for connecting with the ring (19).

7. System according to any one of the preceding claims, **characterized in that** the first and second thrust bearings have at least one identical ring.

8. System according to any one of the preceding claims, **characterized in that** the first and second thrust bearings (14, 15) have identical self-alignment sleeves (26, 40).

9. System according to any one of the preceding claims, **characterized in that** a push rod (43) has a rounded end (46) in contact with a radial pressure element (47) of a thrust bearing (14).

10. System according to any one of the preceding claims, **characterized in that** the push rod (43) is in contact via one end with a pressure plate (42) of an operating sleeve (37) of the second thrust bearing (15).

11. System according to any one of the preceding claims, **characterized in that** the first thrust bearing is slidably mounted on a guide tube (22), the second thrust bearing being slidably mounted on a cylindrical bearing surface (11) of the interposed element (4).

12. Drive device for a hybrid drive motor vehicle comprising a rotor interposed axially between a diaphragm (1) of a clutch and a clutch control member (2), a first thrust rolling bearing (14) able to move axially and in axial contact with a control member (2), a second thrust rolling bearing (15) designed for axial contact with the diaphragm (1) of the clutch, axial push rods (43) arranged between the first thrust bearing (14) and the second thrust bearing (15) and passing through the rotor (4) interposed between the diaphragm (1) and the control member (2), **characterized in that** it comprises a pressure cover (47) for transmitting force between ends of the push rods (43) and a transverse portion (19a) of a ring (19) of the first thrust bearing.

## Patentansprüche

1. Betätigungsvorrichtung für eine Kraftfahrzeugkupplung, die ein erstes Wälzlager (14), das axial beweglich und in Kontakt mit einem Betätigungsorgan (2) ist, ein zweites Wälzlager (15), das für einen axialen Kontakt mit einer Federplatte (1) der Kupplung vorgesehen ist, und axiale Druckvorrichtungen (43) aufweist, die zwischen dem ersten Lager (14) und dem zweiten Lager (15) angeordnet sind und ein rotierendes Element (4) durchdringen, das zwischen der Federplatte (1) und dem Betätigungsorgan (2) angeordnet ist, **dadurch gekennzeichnet, dass** sie eine Stützkappe (47) aufweist, um Kräfte zwischen den Enden der Druckvorrichtungen (43) und einem Stirnbereich (19a) eines Ringes (19) des ersten Lagers (14) zu übertragen.

2. Vorrichtung nach Anspruch 1, **dadurch gekennzeichnet, dass** die Kappe (47) eine radiale Stützscheibe (48) aufweist.

3. Vorrichtung nach Anspruch 1 oder 2, **dadurch gekennzeichnet, dass** die Kappe einen Zentrierrand (50) aufweist, der zum Zusammenwirken mit einer Umlauffläche eines Ringes (19) des ersten Lagers (14) bestimmt ist, der den Stirnbereich (19a) trägt.

4. Vorrichtung nach einem der vorhergehenden Ansprüche, **dadurch gekennzeichnet, dass** die Kappe (47) einen Rand (50,53) zur Befestigung an einem Ring (19) des ersten Lagers (14) aufweist, der mit Radialvorsprüngen oder einem Wulst versehen ist.

5. Vorrichtung nach einem der vorhergehenden Ansprüche, **dadurch gekennzeichnet, dass** die Kappe (47) eine Radialscheibe (48), die sich in Kontakt mit einem Stirnbereich (19a) eines Außenringes (19) des ersten Lagers (14) befindet, und einen zylindrischen Außenbereich (62) aufweist, der den Außenring (19) umgibt und an seinem freien Ende (63) mit Befestigungsmitteln an einem Ende des Außenringes (19) versehen ist, das dem Stirnbereich (19a) entgegengesetzt liegt.

6. Vorrichtung nach Anspruch 1, **dadurch gekennzeichnet, dass** die Kappe (47) einstückig mit dem Ring (19) ausgebildet ist und eine Radialscheibe (48) und einen Verbindungsbereich mit dem Ring (19) aufweist.

7. Vorrichtung nach einem der vorhergehenden Ansprüche, **dadurch gekennzeichnet, dass** das erste und zweite Lager wenigstens einen identischen Ring aufweisen.

8. Vorrichtung nach einem der vorhergehenden Ansprüche, **dadurch gekennzeichnet, dass** das erste und zweite Lager (14,15) identische Hülsen (26,40) zur Selbstausrichtung aufweisen.

9. Vorrichtung nach einem der vorhergehenden Ansprüche, **dadurch gekennzeichnet, dass** eine Druckvorrichtung (43) ein abgerundetes Ende (46) in Kontakt mit einem radialen Stützelement (47) eines Lagers (14) aufweist.

10. Vorrichtung nach einem der vorhergehenden Ansprüche, **dadurch gekennzeichnet, dass** sich die Druckvorrichtung (43) mit einem Ende in Kontakt mit einer Stützplatte (42) einer Betätigungsbuchse (37) des zweiten Lagers (15) befindet.

11. Vorrichtung nach einem der vorhergehenden Ansprüche, **dadurch gekennzeichnet, dass** das erste Lager verschieblich auf einer röhrenförmigen Führung (22) montiert ist und das zweite Lager verschieblich auf einer zylindrischen Lagerfläche (11) des zwischenliegenden Elements (4) montiert ist.

12. Antriebsvorrichtung für ein Kraftfahrzeug mit Hybridantrieb, das einen Rotor, der axial zwischen einer Federplatte (1) einer Kupplung und einem Betätigungsorgan (2) der Kupplung angeordnet ist, ein erstes Wälzlager (14), das axial beweglich und in axialem Kontakt mit einem Betätigungsorgan (2) ist, ein zweites Wälzlager (15), das für einen axialen Kontakt mit der Federplatte (1) der Kupplung vorgesehen ist, und axiale Druckvorrichtungen (43) aufweist, die zwischen dem ersten Lager (14) und dem zweiten Lager (15) vorgesehen sind und den zwischen der Federplatte (1) und dem Betätigungsorgan (2) liegenden Rotor (4) durchdringen, **dadurch gekennzeichnet, dass** sie eine Stützkappe (47) zur Kraftübertragung zwischen den Enden der Druckvorrichtungen (43) und einem Stirnbereich (19a) eines Ringes (19) des ersten Lagers aufweist.
